# EUROPEAN PATENT SPECIFICATION

(11) **EP 4 241 331 B1**
(45) Date of publication and mention of the grant of the patent: **01.10.2025**
(21) Application number: 21707659.5
(22) Date of filing: 22.02.2021
(51) Int. Cl.: H01Q 3/30, H01Q 9/04, H01Q 13/20, H01Q 21/08, H01Q 25/00, H01Q 21/00

(54) **SELF-COMPENSATING ANALOG BEAMFORMING TRAVELING-WAVE PHASED ARRAY**
SELBSTKOMPENSIERENDES ANALOGES STRAHLFORMUNGSWANDERWELLENPHASENARRAY
RÉSEAU À COMMANDE DE PHASE À ONDES PROGRESSIVES À FORMATION DE FAISCEAU ANALOGIQUE À AUTO-COMPENSATION

(43) Date of publication of application: 13.09.2023
(73) Proprietor: Huawei Technologies Co., Ltd., Shenzhen, Guangdong 518129 (CN)
(72) Inventor: CHENG, Shi, 16440 Kista (SE); IMBERG, Ulrik, 16440 Kista (SE); PIRAK SIKKU, Nilsánu, Johan, 16440 Kista (SE)
(74) Representative: Maiwald GmbH
(86) International application number: PCT/EP2021/054262
(87) International publication number: WO 2022/174925

(56) References cited:
- WO-A1-2019/120513
- WO-A1-2020/020107
- US-A1- 2019 086 535
- US-A1- 2020 358 182
- US-B2- 9 780 447
- KARIMKASHI SHAYA ET AL: "A Dual-Polarized Series-Fed Microstrip Antenna Array With Very High Polarization Purity for Weather Measurements", IEEE TRANSACTIONS ON ANTENNAS AND PROPAGATION, IEEE SERVICE CENTER, PISCATAWAY, NJ, US, vol. 61, no. 10, 1 October 2013 (2013-10-01), pages 5315 - 5319, XP011528845, ISSN: 0018-926X, [retrieved on 20131003], DOI: 10.1109/TAP.2013.2273813
- VICTOR J MARRERO-FONTANEZ ET AL: "Dual polarized aperture-coupled microstrip patch antenna for X-band series-fed array", ANTENNAS AND PROPAGATION INTERNATIONAL SYMPOSIUM, 2007 IEEE, IEEE, PISCATAWAY, NJ, USA, 1 June 2007 (2007-06-01), pages 2148 - 2151, XP031169596, ISBN: 978-1-4244-0877-1

## Description

### TECHNICAL FIELD

Generally, the following description relates to the field of wireless communications. More specifically, the following description relates to wireless communications analog beamforming using a self-compensating traveling-wave phased array independently or in a hybrid configuration with digital beamforming.

### BACKGROUND

Beamforming is an important concept in modern wireless communications. Beamforming is a technique that is used to focus a wireless signal towards a specific receiving device. The number, size and shape of beams varies in different wireless technologies. Beamforming relies on the principle of controlling the phase and gain of several antenna elements to produce a beam in a desired direction using constructive interference of the individual antenna elements.

Currently, wireless communication networks typically use digital beamforming where phase and power is controlled in each antenna element digitally. Digital beamforming gives accurate control of the beam tilt by precise control of phase and amplitude of the excitation to each antenna element.

Digital beamforming has a drawback of high cost, as there is a need for an independent radio frequency chain associated with the corresponding digital signal processing blocks for each antenna element. This increases the number of components as well as the power consumption of the antenna array. Analog beam forming may be used in order to reduce the cost associated with digital beam forming. However, drawbacks of the analog beam forming include reduced beam agility and steerability, increased beam squint and degraded suppression of side- and grating-lobes.

Thus, there is a need for beam forming arrangement addressing the above-mentioned drawbacks at a lower cost.

WO 2019/120513 A1 describes an analog beam steerable phased-array antenna. US 2019/086535 A1 describes an antenna device for a radar sensor in the automotive field. US 2020/358182 A1 describes a transceiver for low-complexity beam steering including a first and a second antenna array. KARIMKASHI SHAYA ET AL: "A Dual-Polarized Series-Fed Microstrip Antenna Array With Very High Polarization Purity for Weather Measurements", IEEE TRANSACTIONS ON ANTENNAS AND PROPAGATION, IEEE SERVICE CENTER, PISCATAWAY, NJ, US, vol. 61, no. 10, 1 October 2013 (2013-10-01), pages 5315-5319, XP01 1528845, ISSN: 0018-926X, DOI: 10.1109/TAP.2013.2273813 describes a dual-polarized series-fed microstrip antenna array with very high polarization purity for weather measurements. VICTOR J MARRERO-FONTANEZ ET AL: "Dual polarized aperture-coupled microstrip patch antenna for X-band series-fed array", ANTENNAS AND PROPAGATION INTERNATIONAL SYMPOSIUM, 2007 IEEE, IEEE, PISCATAWAY, NJ, USA, 1 June 2007 (2007-06-01), pages 2148-2151, XP031 169596, ISBN: 978-1-4244-0877-1 describes a dual polarized aperture-coupled microstrip patch antenna for X-band seried-fed array. US 9 780 447 B2 describes an antenna system having an antenna array with multiple sub-arrays.

### SUMMARY

The invention is defined by the independent claims. Further embodiments are defined by the dependent claims. An antenna array comprising two traveling-wave sub-arrays is disclosed. The antenna array has two or more feed lines for each sub-array for providing a transmission or receiving signal to the antenna elements of each sub-array. The transmission or receiving signals propagate in the feed lines in opposite directions with regard to each other. The antenna array provides improved beam squint compensation, polarization agility and beam steerability with continuity or fine step sizes while maintaining a simple and cost-efficient structure.

In an aspect, an antenna array is disclosed. The antenna array comprises a first travelling-wave sub-array comprising a plurality of antenna elements and a second travelling-wave sub-array comprising a second plurality of antenna elements. The antenna array further comprises two or more feed lines for each of the first travelling-wave sub-array and the second travelling-wave sub-array, wherein the feed lines are configured to provide a signal along the first and the second travelling-wave sub-arrays in opposite directions. The configuration wherein the transmission or receiving signals propagate in opposite directions to each other provides increased self-compensating properties and increases the operational bandwidth.

The antenna array comprises two or more feed lines for each sub-array wherein the feed lines are configured to cause an orthogonal polarization at each antenna element in the sub-array. It is beneficial to use this arrangement as it provides polarization agility within the antenna elements.

In an implementation, the feed lines are independent with regard to each other. The independent operability provides flexibility to the controlling of the antenna array. In an implementation each of the feed lines is configured to receive a transmission signal from an independent transmitter or direct the received signals from the antenna elements to an independent receiver. The independent transmitter or receiver provides accuracy to the controlling of the antenna array. In another implementation, each of the feed lines further comprises a digital-to-analog converter or/and an analog-to-digital converter and a radio frequency processing circuit configured to transmit or receive signals. Independent components at each of the feed lines improve the independent controllability of each feed line.

In an implementation, the feed lines are configured to provide the transmission or receiving signal from the center of the antenna array. It is beneficial to have the feed lines starting in the center, so that propagation in opposite directions can be arranged from a single point.

In an implementation, the plurality of antenna elements are arranged so that the first and the second travelling-wave sub-arrays are asymmetric with respect to each other. The asymmetry introduced ensures that the initial beam angle of each sub-array is aligned in the same direction, providing a constructive radiation pattern in the desired direction. Furthermore, the implementation uses two asymmetric center fed sub-arrays which operate together to reduce beam squint.

In an implementation, the antenna elements are of at least two different sizes. Using different sizes is a practical way of implementing the asymmetry. In an implementation, the antenna elements are arranged with a phase shift. Using a different phase shift in different sub-arrays is another practical way of implementing the asymmetry. In an implementation, the first and the second travelling-wave sub-arrays comprise one or more antenna elements configured to introduce two or more progressive phase-shifts. It is practical to use progressive phase shifts in sub-arrays in order to achieve the asymmetry.

In an implementation, at least one of the feed lines comprises an integrated phase shifter. The phase shifter provides beam steerability. A benefit of the antenna array is that in order to achieve beam steerability with continuity or fine step sizes, a low number of phase shifters and phase shifter states are required.

In an implementation, an antenna element in the antenna array further comprises a common ground plane further comprising apertures and a radiating patch. The feed lines are coupled with the antenna elements using the apertures in the common ground plane separating the feed lines and the radiating patch. This provides a very simple feed network, where the feed lines and radiating elements are mounted on separate substrates.

In an aspect, a network element comprising an antenna array as discussed above is disclosed. It is beneficial to use an antenna array as disclosed above in a network element. The antenna array as described above provides polarization agility, reduces beam squint and increases the beam steering range compared to a conventional traveling-wave phased array. Furthermore, the antenna array as described above makes analog beam forming a more viable and cost-efficient alternative to digital beam forming or a complement by integration into a hybrid beam forming arrangement. The antenna array as disclosed above is particularly beneficial in a hybrid approach, wherein the analog beam forming may be used to supplement the digital beamforming. The hybrid approach provides enhanced beam forming as both digital and analog beamforming in a hybrid approach provide the strengths of both approaches. In an implementation of the network element, the antenna array is at a tilted angle. It is beneficial that the antenna array may have different orientations in the network element so that the beams are directed in directions where the users are expected to be.

In an aspect, a user equipment comprising an antenna array as discussed above is disclosed. It is beneficial to have a user equipment with corresponding features so that the complete system capabilities are increased.

The foregoing and other objects are achieved by the subject matter of the independent claims. Further implementation forms are apparent from the dependent claims, the description and the figures.

The principles discussed in the description can be implemented in hardware and/or software.

### BRIEF DESCRIPTION OF THE DRAWINGS

Further example embodiments will be described with respect to the following figures, wherein:
Fig. 1a shows an example of an antenna array not covered by the appended claims;
Fig. 1b shows an example of a more advanced example of an antenna array;
Fig. 2 shows an example of an antenna element;
Fig. 3 shows an example of an antenna array;
Fig. 4 shows two examples of an antenna element;
Fig. 5 shows an example illustrating dual-polarization;
Fig. 6 shows an example of an arrangement using an antenna array; and
Fig. 7 shows an example of an arrangement using an antenna array.

In the figures, identical reference signs will be used for identical or at least functionally equivalent features.

### DETAILED DESCRIPTION OF THE EMBODIMENTS

In the following description, reference is made to the accompanying drawings, which form part of the disclosure, and in which are shown, by way of illustration, specific aspects in which the apparatuses and methods may be provided. It is understood that other aspects may be utilized and structural or logical changes may be made without departing from the scope of the claims. Thus, the following detailed description is not to be taken in a limiting sense.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

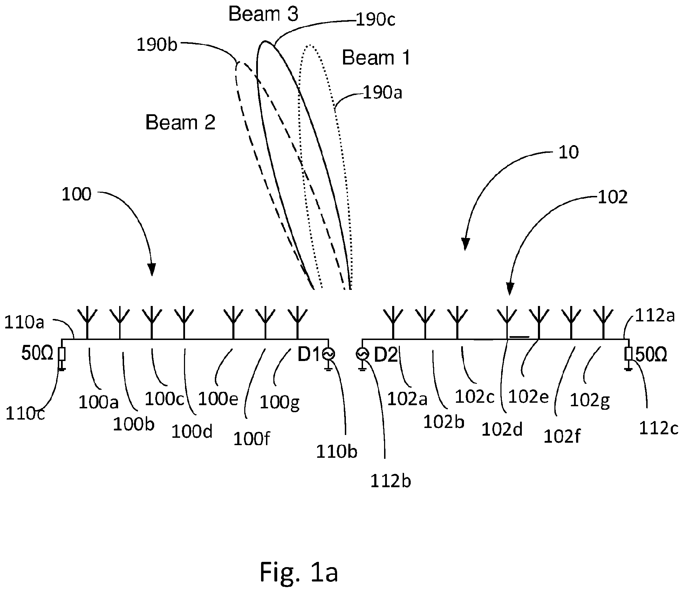

Fig. 1a discloses an example of an antenna array. The antenna array 10 of Fig. 1a comprises a first travelling-wave sub-array 100 comprising antenna elements 100a - 100g and a second travelling-wave sub-array 102 comprising antenna elements 102a - 102g. In the example of Fig. 1a, both sub-arrays comprise seven antenna elements; however, the number of antenna elements is not limited to seven but may vary according to the actual antenna design. Thus, it is possible to have antenna arrays having fewer or more than seven antenna elements. The antenna elements are connected to each other using feed lines 110a - 110c, 112a - 112c. In the example of Fig. 1a, each sub-array comprises one feed line. The feed lines are configured to provide an analog transmission or receiving signal to the antenna elements 100a - 100g of the first and the antenna elements 102a - 102g of the second travelling-wave sub-arrays. The example of Fig. 1a shows three different beams 190a - 190c transmitted or received by the antenna array. The actual range, size and shape of the beams is dependent on the configuration of the antenna array.

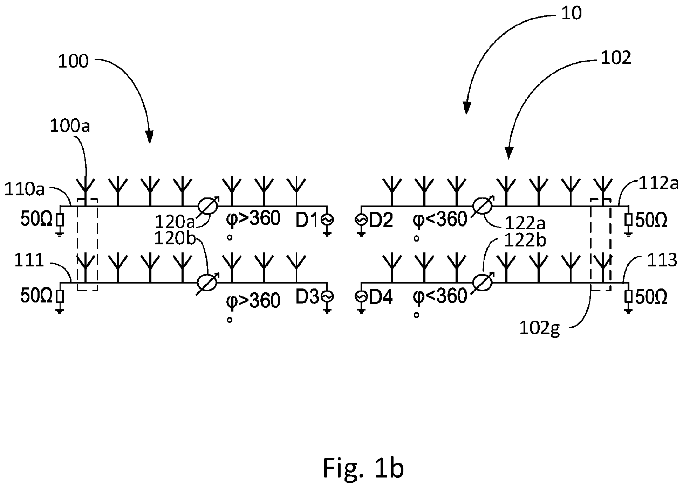

The feed lines are connected to a transmitter or a receiver 110b that either provides an analog transmission signal to the line 110a or acts as a receiver of an incoming analog signal in 110a. The feed line further comprises a termination 110c. Thus, the feed line passes through antenna elements 100a - 100g and provides the signal to be transmitted to the antenna elements 100a - 100g or collects the signal to be received by the antenna elements 100a - 100g. The feed line 112a is constructed similarly and is connected to a transmitter or a receiver 112b and a termination 112c. In the example of Fig. 1, the transmitters or receivers 110b, 112b of the feed lines are arranged between the first sub-array 100 and the second sub-array 102. Thus, the analog transmission or receiving signals in the travelling wave arrays propagate in opposite directions. The configuration wherein the analog transmission or receiving signals propagate in opposite directions to each other provides increased self-compensating properties and increases the operational bandwidth. In the example of Fig. 1, the opposite directions have been arranged so that the signals propagate from the center to the edges; however, also other opposite directions may be used, such as from the edges towards the center or other directions depending on the configuration of the sub-arrays. For example, the sub-arrays may be parallel to each other. Thus, the opposite directions may be upwards for the first sub-array and downwards for the second sub-array.

Fig. 1b discloses a more advanced example of an antenna array. The antenna array is similar to the example of Fig. 1a but includes a plurality of additional optional features that will be explained below. Firstly, the example of Fig. 1b comprises two feed lines for each sub-array with the feed lines in each sub-array sharing antenna elements. Feed lines 110a and 111 provide the transmission or receiving signal to the sub-array 100. The feed lines 110a and 111 are connected to the antenna elements as shown with regard to antenna element 100a. The first feed line 110a is connected to the first side of the antenna element 100a and the feed line 111b to the other side. The coupling will be discussed in more detail below. In the example of Fig. 1b, only antenna elements 100a, 102g are shown in detail; however, the other antenna elements 100a - 100g, 102a - 102g are similar in the example of Fig. 1b. Thus, all antenna elements are provided with two transmission signals that propagate from the center towards each edge in the transmit mode. The received signals from all antenna elements are collected at the receivers 110b, 112b in the receive mode. This arrangement is used in order to provide polarization control within the antenna arrays.

Each of the feed lines 110a, 111, 112a, 113 gives rise to a linearly polarized excitation or reception where the excitations or receptions from each feed line in a single sub-array are orthogonal to each other. By ensuring that the polarization purity and isolation between the feed lines is high, the two feed lines can be operated independently as shown in the example of Fig. 1b wherein each of the feed lines have an independent transmitter or receiver. Feed lines 110a and 111 are operated together to form a linearly polarized beam, and the phase difference between them can be controlled for a continuous or fine steering of the beam.

In the example of Fig. 1b, the sub-arrays 100 and 102 are asymmetric to each other. In the example of Fig. 1b the asymmetry introduced ensures that the initial beam angle of each sub-array is aligned in the same direction, providing a constructive radiation pattern in the desired direction. The asymmetry does not need to be arranged so that each sub-array is aligned, however, this arrangement is often beneficial for the performance. In the example of Fig. 1b, the asymmetry is realized by using a different radiating element patch sizes in each of the sub-arrays. In the example of Fig. 1 the phase-shift is caused by using different electrical length between the antenna elements- The first sub-array 100 comprises a phase shift of more than 360 degrees and the second sub-array 102 comprises is configured to have a phase shift of less than 360 degrees. The mentioned phase shifts are just examples and also other phase shifts may be used. Furthermore, the asymmetry may be caused using antenna elements of different sizes or the distance between the antenna elements may be different, which is a progressive phase-shift as explained above.

In the example of Fig. 1b, each of the feed lines 110a, 111, 112a, 113 has a single integrated three-state phase shifter 120a, 120b, 122a, 122b. Using only one phase shifter per feed line with three states in each ensures that the reconfigurable feed network is kept simple and with a low footprint while it also retains low losses. By a combination of phase shifter states, the beam can be shifted to a low, high or middle beam tilt. Using a phase difference between the sub-arrays, the beam angle can be controlled further and can be swept continuously over a smaller range for each phase shifter state. The steering range of each phase shifter combination with a phase difference from a modulator or a demodulator has an overlap ensuring a beam steering range with continuity or fine step sizes over the whole field-of-view.

The phase shifter configuration shown is a single three state phase shifter per feed line. This is presented as an example it is possible to modify the number of phase shifters, phase shifter positions or phase shifter states according to the needs of the application. Furthermore, also the symmetry between phase shifters or a specific phase shifter type such as loaded line or switched line is shown as an example and can thus be replaced with any type of implementation where a controllable phase shift is introduced, e.g. a varactor phase shifter.

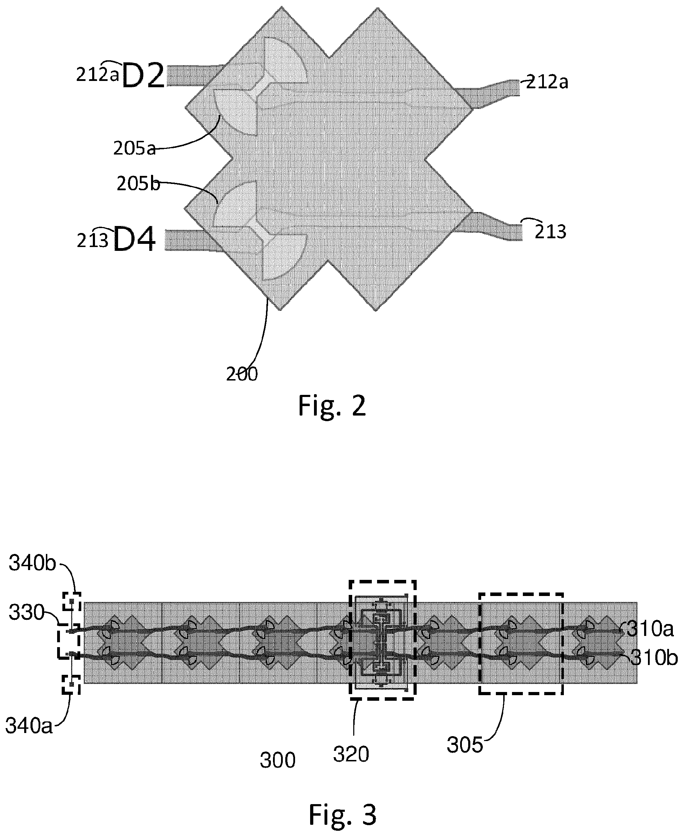

Above, the additional features of the example of Fig. 1b have been discussed. Even if the asymmetry, polarization and phase shifter have been discussed here together, they all may be implemented without each other. Thus, the person skilled in the art may implement an antenna array in accordance with Fig. 1 and arrange the antenna elements in a manner that the sub-arrays are asymmetric with regard to each other. The person skilled in the art may use one or more ways for implementing the asymmetry as discussed above. Furthermore, instead of asymmetry, the person skilled in the art may implement an antenna array in accordance with Fig. 1b and provide two or more feed lines for each sub-array so that dual-polarization is achieved. Thus, even if the example of Fig. 2 shows an advanced example including all beneficial features together, a person skilled in the art may choose different features depending on the current application. For example, the person skilled in the art may choose a different number of antenna elements and select the features and how to implement these features based on the number of the antenna elements.

In Fig. 2, an example of an antenna element 200 is shown. The antenna element 200 of Fig. 2 is similar to the antenna element 102g of Fig. 1b. The feed lines 212a, 213 provide the transmission or receiving signal to the antenna element 200. The feed lines go through the antenna element 200 towards the next antenna element or terminating loads. The antenna element further comprises a radiating patch 220 and apertures 205a and 205b. The radiating patch 220 is a cross patch antenna. The cross patch 220 is on another layer than the feed lines 212a, 213. The cross patch 220 and the feed lines 212a, 213 are separated by ground plane apertures 205a, 205b for coupling between the feed lines 212a, 213 and the cross patch 220. The example of Fig. 2 discloses an antenna element that is suitable to be used in an arrangement similar to the example of Fig. 1b. A person skilled in the art understands that different configurations for feed lines may be used. A similar antenna element with only one feed line may be used in an antenna array similar to the example of Fig. 1a.

Fig. 3 shows an example of a sub-array 300 in an antenna array. The sub-array 300 comprises seven antenna elements 305 that are fed by two feed lines 310a and 310b.Each of the feed lines is configured to include an individual integrated phase shifter 320, located between the 3^{rd} and 4^{th} antenna element. The integrated phase shifter 320 may, for example, achieve three different states. In the example of Fig. 3, each feed line comprises one single phase shifter, wherein the phase shifter achieves three states using a switched line where one of the switched lines has a loaded line phase shifter. The sub-array 300 further comprises a termination load 330 and DC-grounds 340a, 340b.

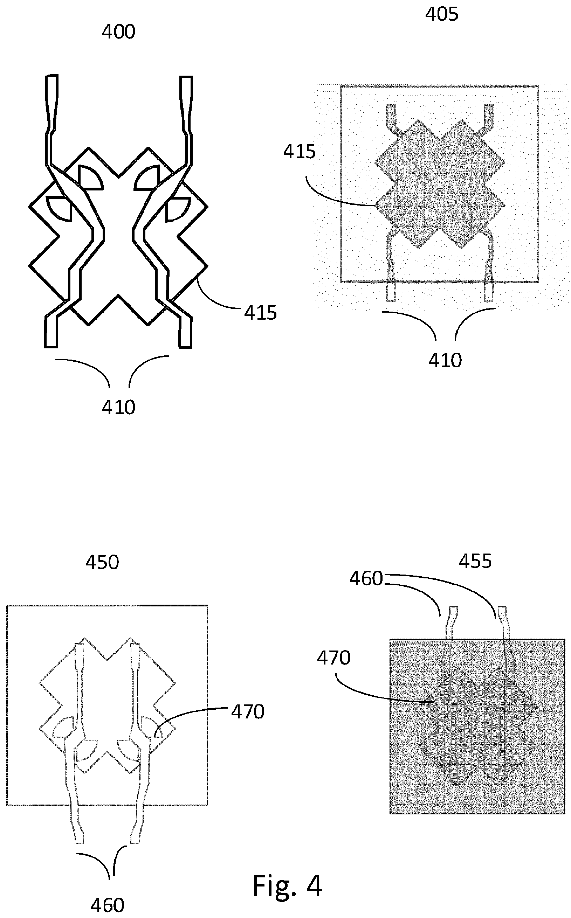

Fig. 4 shows two examples of an antenna element that may be used in the example of Fig. 3. The antenna element 400, 405 is a long antenna element and the antenna element 450, 455 is a short antenna element. The short antenna element is similar to the antenna element of Fig. 2. In Fig. 4, the antenna element 400 is a view from below and the antenna element 405 is a view from the top of the same long antenna element. Accordingly, the antenna element 450 is a view from below and the antenna element 455 is a view from the top of the same short antenna element.

The difference between the short and long antenna elements is the length of feed lines and antenna patch size. It can be seen in the example of Fig. 4 that the short antenna element 450 comprises thestraight feed lines 460, which have an angled section at the apertures 470. The long antenna element has several angles in the feed lines 410 so that the length of the feed lines at the larger radiating patch 415 is longer. These lengths are only examples and also different forms of feed lines may be used.

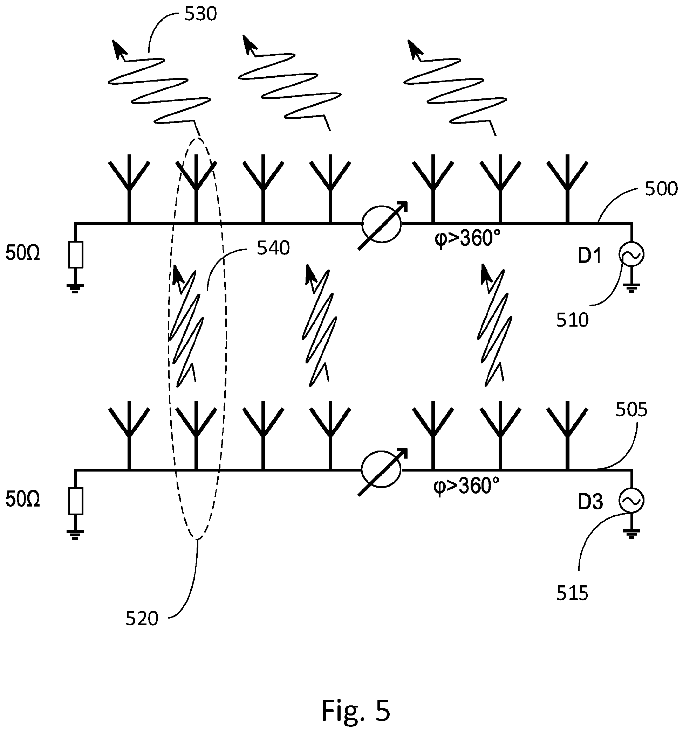

Fig. 5 shows an example illustrating a dual-polarization between the first feed line and the second feed line in an arrangement wherein each sub-array comprises at least two feed lines 500, 505. The first feed line 500 comprises an independent signal transmitter or receiver 510, which provides a signal to antenna elements 520 or receives a signal from antenna elements 520 as explained above. Again, only one antenna element 520 is identified; however, all antenna elements are similar to the antenna as discussed above. All of the antenna elements are not necessarily the same. As explained above, the asymmetry between two different sub-arrays may be caused by using antenna elements with different properties. However, the above explained basic principles apply. Thus, the antenna element 520 may be, for example, an antenna element as shown in Fig. 2. Accordingly, the second feed line 505 comprises an independent signal transmitter or receiver 415. Because of the dual-polarization, two different signals, 530, 540 are transmitted or received by each of the antenna elements. In the example of Fig. 4, the first feed line 500 has a horizontal or +45° polarization and the second feed line 505 has a vertical or -45° polarization. Thus, the feed lines are orthogonally polarized. The polarizations shown in the example of Fig. 5 may also be configured otherwise.

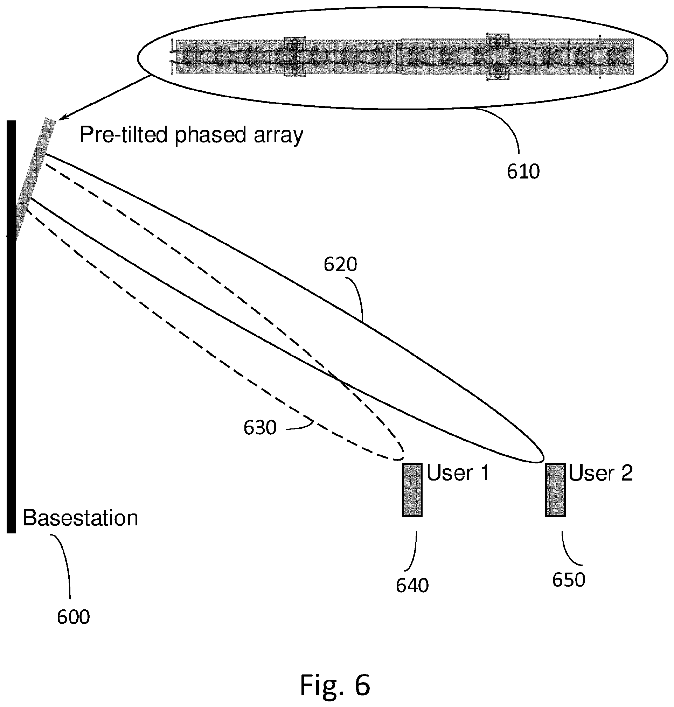

Fig. 6 shows an example of an arrangement using an antenna array as discussed above. In the example, a base station 600 is serving a first user equipment 640 and a second user equipment 650. The base station comprises an antenna array 610 which is similar to the antenna array as discussed above. In the example of Fig. 6, the antenna array is pre-tilted; however, the tilting angle is just an example and also different tilting angles may be used.

The base station serves the first user equipment 640 using a first beam 630 and the second user equipment 650 using a second beam 620. In the example of Fig. 6 also the first user equipment 640 and the second user equipment 650 comprise an antenna array similar to antenna arrays described above. When the antenna array is implemented in a user equipment it may be necessary to use smaller antenna patches and also to adjust other parameters of the antenna array so that they fit the device.

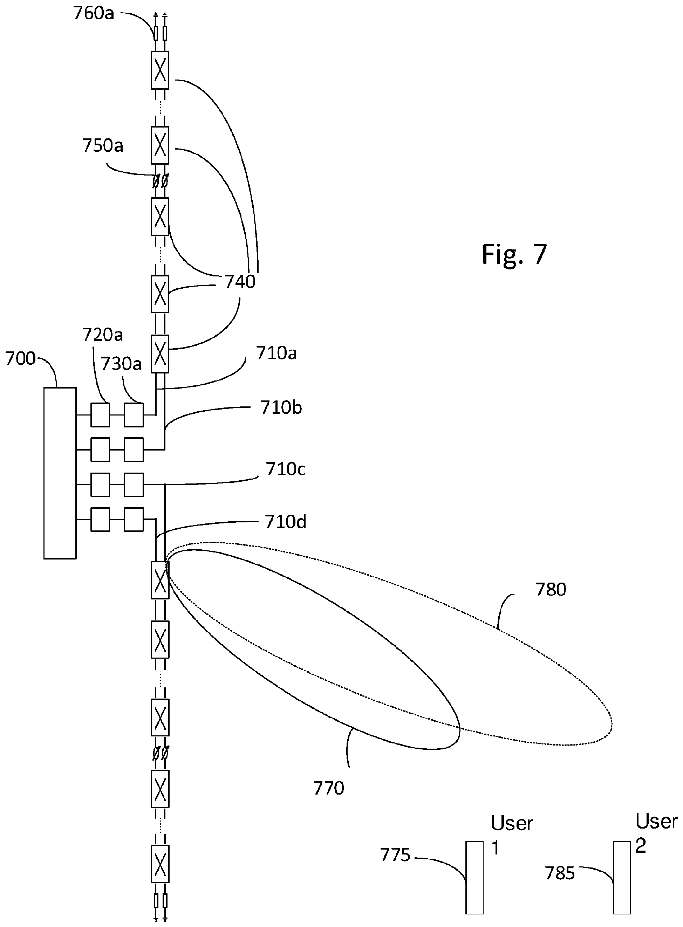

Fig. 7 shows another example similar to the example of Fig. 6. In the example, a baseband processing unit 700 is shown. The baseband processing unit 700 provides a signal to each of the feed lines 710a - 710d in the transmit mode and receive a signal from each of the feed lines 710a - 710d in the receive mode. In the following, the feed line 710a is explained in more detail. Each of the feed lines are independent. In the transmit mode, the baseband processing unit provides the signal first to a digital-to-analog converter 720a. The analog signal is then passed to a radio frequency processing unit 730a. The processed signal is then provided to antenna elements 740. In the receive mode, the received signals from antenna elements are first directed to a radio frequency processing unit 730a. The analog signal is then passed to an analog-to-digital converter 720a. Fig. 7 shows five antenna elements 740; however, as explained above, the number of antenna elements can be chosen on application basis. The antenna elements are also fed by a second feed line 710b. In the example, the feed line 710a further comprises one integrated phase shifter 750a and a termination load 760a. With this arrangement, a first beam 770 can be used to serve a first user equipment 775 and a second beam 780 can be used to serve a second user equipment 780.

The examples in Figs. 6 and 7 show a network element comprising an antenna array similar to the antenna arrays described in the examples above. These network elements may include more than one antenna array. Thus, a network element comprising analog and digital beamforming may be used in order to have a network element with hybrid beamforming. The examples shown in Figs. 6 and 7 may also include more than one network technology. It is possible that network element comprises means for two or more different communication technologies. These technologies may use own antenna structures or they can share one or more antennas with other technologies.

As explained above, the arrangements using positioning as described above may be implemented in hardware, such as a mobile telephone, tablet computer, computer, telecommunication network base station or any other network connected device, or as a method. The method may be implemented as a computer program. The computer program is then executed in a computing device.

The apparatus for positioning and the corresponding method have been described in conjunction with various embodiments herein. However, other variations to the disclosed embodiments can be understood and effected by those skilled in the art in practicing the claimed invention from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. An antenna array (10) comprising:
- a first travelling-wave sub-array (100) comprising a plurality of antenna elements (100a - 100g) and a second travelling-wave sub-array (102) comprising a plurality of antenna elements (102a - 102g) ; and
- two or more feed lines (110a, 110b, 112a, 112b) for each of the first travelling-wave sub-array and the second travelling-wave sub-array, wherein the feed lines are configured to provide a signal along the first (100a - 100g) and the second (102a - 102g) travelling-wave sub-arrays in opposite directions, wherein the feed lines are configured to cause an orthogonal polarization at each antenna element in the sub-array, and wherein the feed lines (110a, 110b, 112a, 112b) are independently operable with regard to each other.

2. The antenna array according to claim 1, wherein each of the feed lines (110a, 110b, 112a, 112b) is configured to receive a transmission signal from an independent transmitter or direct the received signals from the antenna elements (100a - 100g. 102a - 102g) to an independent receiver.

3. The antenna array according to claim 1 or 2, wherein each of the feed lines (110a, 110b, 112a, 112b, 710a - 710d) further comprises a digital-to-analog converter or/and an analog-to-digital converter (720a) and a radio frequency processing circuit (730a) further configured to transmit and/or receive signals.

4. The antenna array according to any of claims 1 - 3, wherein the feed lines (110a, 110b, 112a, 112b) are configured to provide transmission signal from the center of the antenna array (10) or direct receiving signal to the center of the antenna array (10).

5. The antenna array according to any of claims 1 - 4, wherein the plurality of antenna elements (100a - 100g, 102a - 102g) are arranged so that the first travelling-wave sub-arrays (100) and the second travelling-wave sub-arrays (102) are asymmetric with respect to each other.

6. The antenna array according to any of claims 1 - 5, wherein the antenna elements (100a - 100g, 102a - 102g) are of at least two different sizes.

7. The antenna array according to any of claims 1 - 6, wherein the antenna elements are arranged with a phase shift.

8. The antenna array according to any of claims 1 - 7, wherein at least one of the feed lines comprises an integrated phase shifter (120a, 122a).

9. The antenna array according to any of claims 1 - 8, wherein an antenna element in the antenna array further comprises:
- a common ground plane further comprising apertures (205a, 205b); and
- a radiating patch (220);
wherein the feed lines (110a, 110b, 112a, 112b) are coupled with the antenna elements (100a - 100g, 102a - 102g) using the apertures (205a, 205b) in the common ground plane separating the feed lines (212a, 212b) and the radiating patch (220).

10. The antenna array according to any of claims 1 - 9, wherein the first and the second travelling-wave sub-arrays comprise one or more antenna elements configured to introduce two or more progressive phase-shifts.

11. A network element (600) comprising an antenna array (610) according to any of claims 1 - 10.

12. The network element (600) according to claim 11, wherein the antenna array (610) is at a tilted angle.

13. A user equipment (640, 650) comprising an antenna array (610) according to any of claims 1 - 10.

## Patentansprüche

1. Antennenarray (10), umfassend:
ein erstes Wanderwellen-Subarray (100), das eine Vielzahl von Antennenelementen (100a-100g) umfasst, und ein zweites Wanderwellen-Subarray (102), das eine Vielzahl von Antennenelementen (102a-102g) umfasst; und
zwei oder mehr Speiseleitungen (110a, 110b, 112a, 112b) für jedes des ersten Wanderwellen-Subarrays und des zweiten Wanderwellen-Subarrays, wobei die Speiseleitungen dazu konfiguriert sind, ein Signal entlang des ersten (100a-100g) und des zweiten (102a-102g) Wanderwellen-Subarrays in entgegengesetzten Richtungen bereitzustellen,
wobei die Speiseleitungen dazu konfiguriert sind, an jedem Antennenelement in dem Subarray eine orthogonale Polarisation zu bewirken, und wobei die Speiseleitungen (110a, 110b, 112a, 112b) unabhängig voneinander betreibbar sind.

2. Antennenarray gemäß Anspruch 1, wobei jede der Speiseleitungen (110a, 110b, 112a, 112b) dazu konfiguriert ist, ein Übertragungssignal von einem unabhängigen Sender zu empfangen oder die empfangenen Signale von den Antennenelementen (100a - 100g, 102a - 102g) zu einem unabhängigen Empfänger zu leiten.

3. Antennenarray gemäß Anspruch 1 oder 2, wobei jede der Speiseleitungen (110a, 110b, 112a, 112b, 710a-710d) ferner einen Digital-Analog-Wandler oder/und einen Analog-Digital-Wandler (720a) und eine Hochfrequenzverarbeitungsschaltung (730a) umfasst, die ferner dazu konfiguriert ist, Signale zu übertragen und/oder zu empfangen.

4. Antennenarray gemäß einem der Ansprüche 1-3, wobei die Speiseleitungen (110a, 110b, 112a, 112b) dazu konfiguriert sind, ein Übertragungssignal von der Mitte des Antennenarrays (10) bereitzustellen oder ein Empfangssignal zu der Mitte des Antennenarrays (10) zu leiten.

5. Antennenarray gemäß einem der Ansprüche 1-4, wobei die Vielzahl von Antennenelementen (100a-100g, 102a-102g) so angeordnet sind, dass die ersten Wanderwellen-Subarrays (100) und die zweiten Wanderwellen-Subarrays (102) asymmetrisch zueinander sind.

6. Antennenarray gemäß einem der Ansprüche 1-5, wobei die Antennenelemente (100a-100g, 102a-102g) mindestens zwei unterschiedliche Größen aufweisen.

7. Antennenarray gemäß einem der Ansprüche 1-6, wobei die Antennenelemente mit einer Phasenverschiebung angeordnet sind.

8. Antennenarray gemäß einem der Ansprüche 1-7, wobei mindestens eine der Speiseleitungen einen integrierten Phasenschieber (120a, 122a) umfasst.

9. Antennenarray gemäß einem der Ansprüche 1-8, wobei ein Antennenelement in dem Antennenarray ferner Folgendes umfasst:
eine gemeinsame Masseebene, ferner umfassend Öffnungen (205a, 205b); und
einen strahlenden Patch (220);
wobei die Speiseleitungen (110a, 110b, 112a, 112b) mit den Antennenelementen (100a-100g, 102a-102g) unter Verwendung der Öffnungen (205a, 205b) in der gemeinsamen Masseebene gekoppelt sind, die die Speiseleitungen (212a, 212b) und den strahlenden Patch (220) trennt.

10. Antennenarray gemäß einem der Ansprüche 1-9, wobei das erste und das zweite Wanderwellen-Subarray ein oder mehrere Antennenelemente umfassen, die dazu konfiguriert sind, zwei oder mehr progressive Phasenverschiebungen einzuführen.

11. Netzwerkelement (600), umfassend ein Antennenarray (610) gemäß einem der Ansprüche 1-10.

12. Netzwerkelement (600) gemäß Anspruch 11, wobei das Antennenarray (610) sich in einem geneigten Winkel befindet.

13. Benutzergerät (640, 650), das ein Antennenarray (610) gemäß einem der Ansprüche 1-10 umfasst.

## Revendications

1. Réseau d'antennes (10) comprenant :
- un premier sous-réseau à ondes progressives (100) comprenant une pluralité d'éléments d'antenne (100a à 100g) et un second sous-réseau à ondes progressives (102) comprenant une pluralité d'éléments d'antenne (102a à 102g) ; et
- deux ou plusieurs lignes d'alimentation (110a, 110b, 112a, 112b) pour chacun des premier et second sous-réseaux d'ondes progressives, dans lequel les lignes d'alimentation sont configurées pour fournir un signal le long des premier (100a à 100g) et second (102a à 102g) sous-réseaux d'ondes progressives dans des directions opposées,
dans lequel les lignes d'alimentation sont configurées pour provoquer une polarisation orthogonale au niveau de chaque élément d'antenne dans le sous-réseau, et dans lequel les lignes d'alimentation (110a, 110b, 112a, 112b) peuvent fonctionner indépendamment les unes par rapport aux autres.

2. Réseau d'antennes selon la revendication 1, dans lequel chacune des lignes d'alimentation (110a, 110b, 112a, 112b) est configurée pour recevoir un signal de transmission provenant d'un émetteur indépendant ou diriger les signaux reçus provenant des éléments d'antenne (100a à 100g, 102a à 102g) vers un récepteur indépendant.

3. Réseau d'antennes selon la revendication 1 ou 2, dans lequel chacune des lignes d'alimentation (110a, 110b, 112a, 112b, 710a à 710d) comprend également un convertisseur numérique-analogique ou/et un convertisseur analogique-numérique (720a) et un circuit de traitement radiofréquence (730a) configuré également pour transmettre et/ou recevoir des signaux.

4. Réseau d'antennes selon l'une quelconque des revendications 1 à 3, dans lequel les lignes d'alimentation (110a, 110b, 112a, 112b) sont configurées pour fournir un signal de transmission depuis le centre du réseau d'antennes (10) ou diriger un signal de réception vers le centre du réseau d'antennes (10).

5. Réseau d'antennes selon l'une quelconque des revendications 1 à 4, dans lequel la pluralité d'éléments d'antenne (100a à 100g, 102a à 102g) sont disposés de sorte que les premiers sous-réseaux à ondes progressives (100) et les seconds sous-réseaux à ondes progressives (102) sont asymétriques l'un par rapport à l'autre.

6. Réseau d'antennes selon l'une quelconque des revendications 1 à 5, dans lequel les éléments d'antenne (100a à 100g, 102a à 102g) sont d'au moins deux tailles différentes.

7. Réseau d'antennes selon l'une quelconque des revendications 1 à 6, dans lequel les éléments d'antenne sont disposés avec un déphasage.

8. Réseau d'antennes selon l'une quelconque des revendications 1 à 7, dans lequel au moins l'une des lignes d'alimentation comprend un déphaseur intégré (120a, 122a).

9. Réseau d'antennes selon l'une quelconque des revendications 1 à 8, dans lequel un élément d'antenne du réseau d'antennes comprend également :
- un plan de masse commun comprenant également des ouvertures (205a, 205b) ; et
- un patch rayonnant (220) ;
dans lequel les lignes d'alimentation (110a, 110b, 112a, 112b) sont couplées aux éléments d'antenne (100a à 100g, 102a à 102g) à l'aide des ouvertures (205a, 205b) dans le plan de masse commun séparant les lignes d'alimentation (212a, 212b) et le patch rayonnant (220).

10. Réseau d'antennes selon l'une quelconque des revendications 1 à 9, dans lequel les premier et second sous-réseaux à ondes progressives comprennent un ou plusieurs éléments d'antenne configurés pour introduire deux ou plusieurs déphasages progressifs.

11. Élément de réseau (600) comprenant un réseau d'antennes (610) selon l'une quelconque des revendications 1 à 10.

12. Élément de réseau (600) selon la revendication 11, dans lequel le réseau d'antennes (610) est à un angle incliné.

13. Équipement utilisateur (640, 650) comprenant un réseau d'antennes (610) selon l'une quelconque des revendications 1 à 10.
